# EUROPEAN PATENT APPLICATION

(11) **EP 2 762 645 A2**
(43) Date of publication of application: **06.08.2014**
(21) Application number: 13166200.9
(22) Date of filing: 02.05.2013
(51) Int. Cl.: E02F 9/22

(54) **Mobile machine, braking system and method of controlling mobile machine**

(30) Priority: 04.02.2013 CA 2804408
(71) Applicant: Avant Tecno Oy, 33470 Ylöjärvi (FI)
(72) Inventor: Käkelä, Jani, 33470 Ylöjärvi (FI); Sillanpää, Jouko, 33470 Ylöjärvi (FI)
(74) Representative: Kolster Oy Ab

(57) **Abstract**

The invention relates to a mobile machine, a braking system of a mobile machine and a method of controlling a mobile machine. The mobile machine (1) comprises a movable carrier (3) and several wheels (4). The mobile machine is driven (D) on a work site by means of a hydrostatic drive system. The machine is stopped by means of operating brakes. Driving and stationary state of the machine are detected by means of sensing devices (14, 15, 21, 23a, 23b, 24). When the machine is stationary, parking brake devices (28) are activated automatically.

## Description

### Background of the invention

The disclosed solution relates to a mobile machine, and particularly to a parking brake system of the mobile machine.

Further, the solution relates to a braking system and a method of controlling a mobile machine.

The field of the invention is defined more specifically in the preambles of the independent claims.

Movable work machines i.e. mobile machines are widely used for performing different operations at work sites. The mobile machine is provided with an attachment for performing the desired operation. A hydrostatic drive system may be used for driving a carrier of the mobile machine. As known, the hydrostatic drive system may also be utilized as operating brakes. Due to internal leaks in drive motors of the drive system, the hydrostatic drive system cannot be used as parking brakes. Therefore the mobile machine is equipped with parking brake devices. However, safety issues are not proved to be satisfactory especially when operating in extreme work conditions.

### Brief description of the invention

An object of the invention is to provide a novel and improved mobile machine, a braking system of a mobile machine and a method of controlling a mobile machine.

The mobile machine according to the invention is **characterized in that** the control system is arranged to monitor driving of the carrier; and the control system is arranged to engage a braking system automatically and activate parking brakes when determined that the carrier is stationary.

The braking system according to the invention is **characterized in that** the control system comprises at least one sensor arranged to monitor driving of the mobile machine; and the control system is arranged to activate parking brake devices automatically as a response to a determined stationary state of the mobile machine.

The method according to the invention is characterized by detecting driving of the mobile machine by means of at least one sensing device; determining a stationary state of the mobile machine on the basis of the sensing data received from the at least one sensing device; and activating the parking brakes automatically when the stationary state is determined.

An idea of the disclosed solution is that brakes of the mobile machine are activated automatically when determined that the mobile machine is not driven and is stationary. Thus, the mobile machine is provided with automatic parking brakes.

An advantage of the disclosed solution is that the automatic parking brakes improve safety of the mobile machine.

According to an embodiment, the mobile machine is a compact multi-purpose wheel loader which may be equipped with different attachments for different work tasks and applications. Thus, the same basic machine may be used in a versatile manner. The compact wheel loader may be equipped with attachments to serve as a wheel loader, forklift truck, demolition machine, hydraulic breaker, and backhoe for digging, for example. The mobile machine may be used in constructions sites and mines.

According to an embodiment, the mobile machine is a compact multi-purpose wheel loader with articulated steering and provided with a hydrostatic drive system.

According to an embodiment, the control system comprises at least one timing device which is arranged in a drive control system to count time after termination of last actuation of a control element of the drive control system. The timing device is provided with at least one time limit and the timing device is arranged to reset when the control element is actuated again. The control system is arranged to activate parking brakes as a response to exceeding of the time limit. By means of the timing device it may be determined that the mobile machine is stopped and is in a stationary state since no control command for driving are given during a predetermined time limit. In this embodiment the stationary state of the mobile machine is determined indirectly without detecting the actual physical movement of the mobile machine.

According to an embodiment, the timing device is a timing circuit, timing relay or any suitable timer wherein at least one time limit may be set and which allows counting of time to be reset to zero when receiving a signal representing detection of an intentional drive of the work machine in forward or backward direction.

According to an embodiment, the time limit of the timing device is 2 - 4 seconds. During this relatively short time period the mobile machine does not move a significant distance and cause safety problems.

According to an embodiment, the time limit of the timing device is 3 seconds.

According to an embodiment, the parking brake devices are physically separate from operational brake means. When the drive system is hydrostatic, hydraulic motors are used as operational brake means. The parking brake devices may be drum or disc brakes.

According to an embodiment, the parking brake devices are hydromechanical devices arranged to be off when hydraulic pressure acts in a brake system, and arranged to activate by means of spring elements when hydraulic pressure is shut off by a control system, or when the pressure is decreased due to a malfunction in the brake system.

According to an embodiment, the parking brakes are operational only when the mobile machine is stationary. This feature prevents use of the parking brake devices as operational brake devices.

According to an embodiment, the sensor for detecting driving of the mobile machine is a pressure sensor which is arranged in a control pressure line of a hydrostatic drive system of the mobile machine. One or more pressure sensors detect hydraulic control commands of the hydrostatic drive system. Brake control system may comprise a timing device for counting time when no hydraulic control commands for driving the mobile machine are detected. This way, it may be determined in the control system that the mobile machine is stopped after a predetermined time limit and the parking brakes may be actuated. By means of the timing device a predetermined delay for actuating parking brakes is achieved for ensuring that that the mobile machine is stationary.

According to an embodiment, the sensor for detecting driving of the mobile machine is arranged to monitor physical actuation of the at least one control element, whereby neutral position and drive position of the control element are detected. The sensor may be a motion sensor which is arranged in connection with a drive pedal, joystick or any other drive control element and is arranged to detect moving of the drive control element from the neutral position to the drive position. Brake control system may comprise a timing device for counting time when no actuations for driving the mobile machine are detected. This way, it may be determined in the control system that the mobile machine is stopped after a predetermined time limit and the parking brakes may be actuated. By means of the timing device a predetermined delay for actuating parking brakes is achieved for ensuring that that the mobile machine is stationary.

According to an embodiment, the sensor for detecting driving of the mobile machine is a motion sensor which is arranged to detect rotation movement of wheels or axles or a carrier.

According to an embodiment, the sensor for detecting driving of the mobile machine is a scanning device by means of which it is possible to sense movements of a carrier relative to a drive surface or any other surrounding surface.

According to an embodiment, the sensor for detecting driving of the mobile machine is an acceleration sensor, which is arranged to a carrier. When moving a boom or an attachment the carrier may shake a bit and cause minor accelerations. However, these unintentional minor movements and detected accelerations may be filtered off.

According to an embodiment, the control system comprises at least one timing device which is arranged to count time when receiving no signals from at least one sensor detecting physical movement of the mobile machine. The movement of the mobile machine may be detected by means of the above mentioned scanning devices, motion sensors and accelerations sensors. The timing device may be provided with at least one predetermined time limit. The timing device is arranged to count time when the at least one sensor detects that the carrier is stationary, and the timing device is arranged to reset when the at least one sensor detects moving of the carrier. The control system activates parking brake devices automatically as a response to exceeding of the time limit, whereby the time limit defines a delay for the actuation of the parking brakes. An advantage of this embodiment is that in situations where the driving direction is changed, and the mobile machine is stopped between forward and reverse drive, the parking brakes are not actuated despite a short stationary state between the forward and reverse drive. There are also other situations where the mobile machine is stopped for a short time under control of the operator and the driving and operation of the mobile machine are continued without any intention of parking. The delay may be adjusted according to the work cycle of the mobile machine or an attachment, personal driving habits of the operator, and work tasks performed by the mobile machine at the work site, for example.

According to an embodiment, the mobile machine may utilize two or more of the above mentioned detection embodiments for sensing driving.

The above disclosed embodiments may be combined to form suitable solutions, which are provided with necessary features disclosed above.

### Brief description of the figures

Some embodiments are described in more detail in the accompanying drawings, in which
Figure 1 shows schematically a side view of a mobile machine,
Figure 2 is a simplified chart showing some features relating to operation of a mobile machine,
Figure 3 is a simplified block diagram showing some features relating to an automatic parking brake system, and
Figure 4 is a simplified and schematic hydraulic diagram of a mobile machine having a hydrostatic drive system.

For the sake of clarity, the figures show some embodiments of the disclosed solution in a simplified manner. In the figures, like reference numerals identify like elements.

### Detailed description of some embodiments

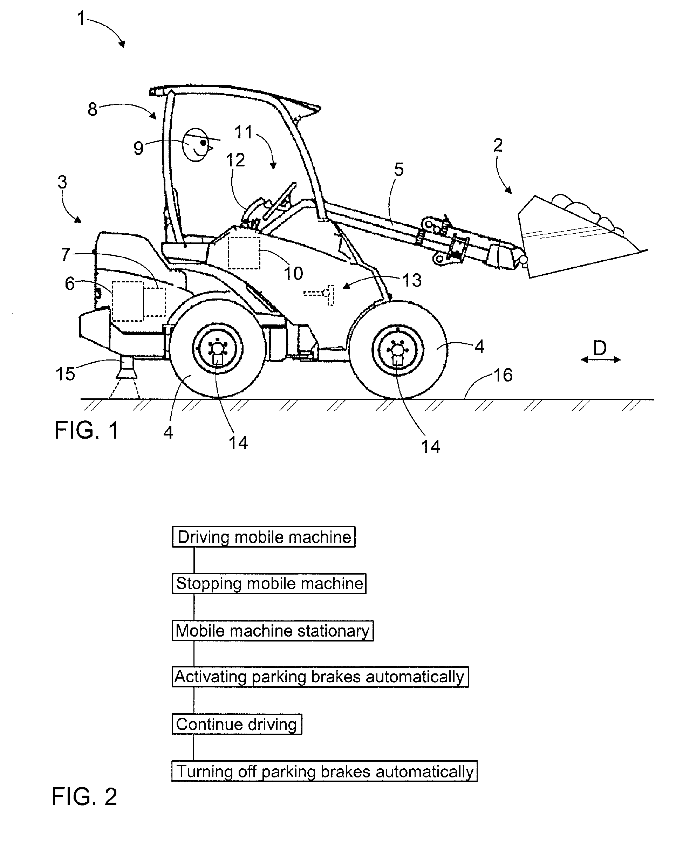

Figure 1 shows a compact multi-purpose wheel loader that is a small sized mobile machine 1. The wheel loader may be equipped with different attachments 2, whereby the same basic machine can be used in a versatile manner for different applications. The wheel loader may be used on constructions sites, road building sites and in mines. The mobile machine may be equipped with suitable attachments so that it may operate as a wheel loader, a forklift truck, a demolition machine, a hydraulic breaker and a backhoe for digging.

The mobile machine 1 comprises a movable carrier 3 having several wheels 4. A movable boom 5 may be attached to the carrier 3 and a bucket or any other needed attachment 2 is arranged at a distal end of the boom 5. The carrier 3 is also provided with an engine 6, which may be a combustion engine. The engine 6 drives a hydraulic pump 7 for generating needed hydraulic power for a hydrostatic drive system. Further, the mobile machine 1 may comprise a control cabin 8, or alternatively a control platform, for an operator 9. The operator 9 may drive D the mobile machine 1 in forward and reverse directions by giving control commands to a control system 10. The operator 9 may actuate one or more drive control elements 11, such as a joystick 12 or a drive pedal 13.

Driving D of the work machine 1, i.e. intentional moving of the carrier 3 in the forward direction or reversing the carrier, may be detected in many ways. A physical actuation of the drive control element 11 may be detected by suitable sensors. Alternatively, a control pressure or a control signal caused by the control element 11 may be detected by means of sensing means. One more alternative is to detect rotation movement of wheels or axles by motion sensors 14. Further, the carrier 3 may be provided with a scanning device 15 for sensing movements of the carrier 3 relative to a drive surface 16. It is possible to utilize one or more of the mentioned means for detecting driving D. The detected information on driving D and a non-driving stationary period is used for controlling automatic parking brakes of the mobile machine 1. The drive surface 16 of the work site may be sloping and then the automatic parking brakes improve safety.

In figure 2 features and steps relating to controlling of a mobile machine are shown in a simplified chart. The features and steps are already discussed in section "Brief description of the invention".

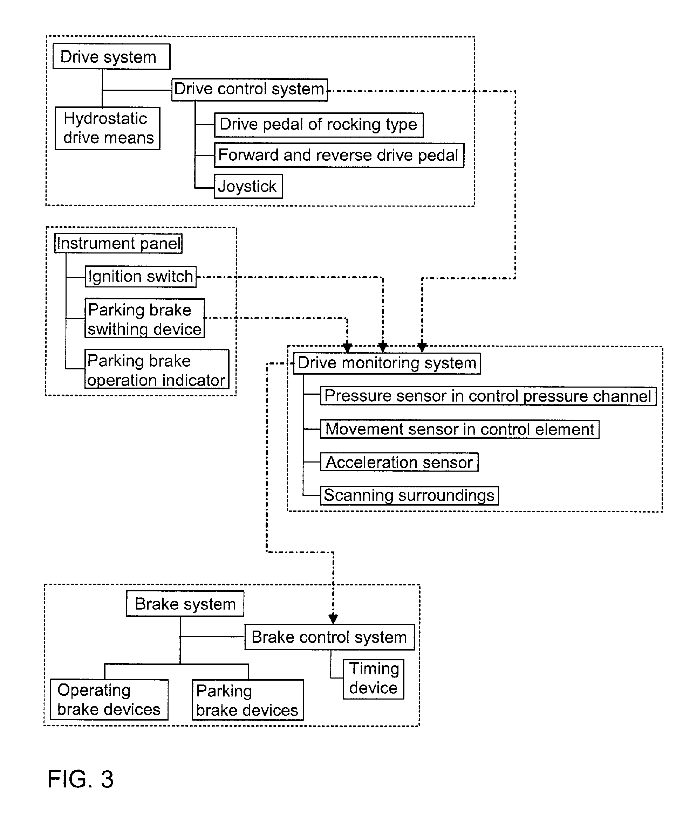

Figure 3 shows in a simplified manner a control principle of the braking system of the present application. A drive monitoring system monitors driving of the mobile machine by receiving sensing data from sensors and from an ignition switch and a parking brake switching device. The mentioned sensors indicate whether the mobile machine is driven or stationary. When the mobile machine is shut down by the ignition switch or when parking brakes are engaged manually by using the parking brake switch, then a control signal is generated in order to engage parking brakes. When activating the parking brakes an indication light may be switched on in an instrument panel.

A brake control system may comprise a timing device, such as a timing relay, which receives control signals from the one or more sensors and delays the actuation of the parking brakes. A time limit is predetermined or can be set in the timing device. The time limit may be 2 - 4 seconds. Preferably the time limit is set to 3 seconds.

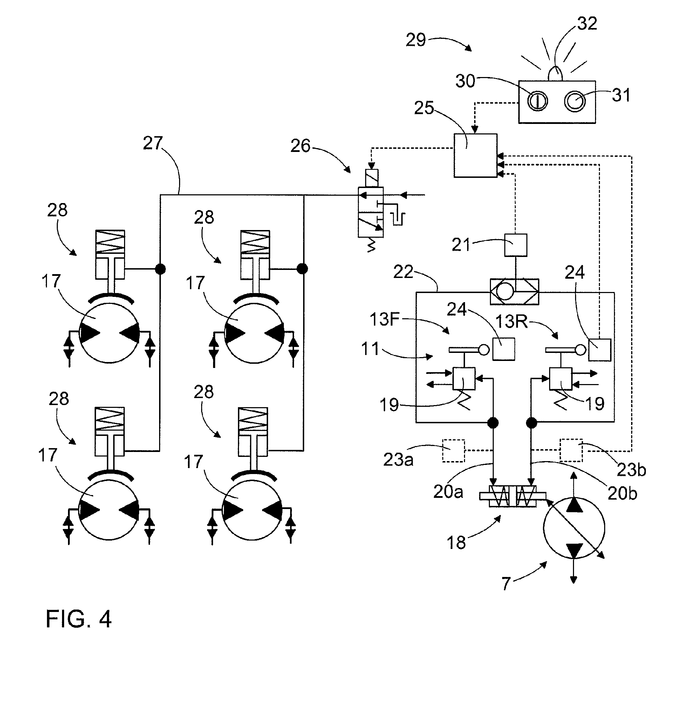

Figure 4 shows a hydraulic diagram of a mobile machine having a hydrostatic drive system. For the sake of clarity, only some of the pressure lines are shown and some of the lines are shown only partly. For the same clarity reason, only some of the valves are shown in figure 4. The hydrostatic drive system comprises a variable displacement pump 7 for generating the needed hydraulic power for hydraulic drive motors 17, which may be arranged directly on wheel hubs. The generated hydraulic power of the pump 7 and the direction of the flow can be adjusted by an adjusting device 18. There may be two drive control pedals, namely a forward drive pedal 13F and a reverse drive pedal 13R, by means of which pedals control valves 19 are affected in order to act on control pressures controlling the adjusting device 18 via control pressure channels or lines 20a, 20b. Alternatively the pedal may be of rocking type so that one single pedal 13 may have a forward drive position, a reverse drive position and a neutral position between the drive positions. Further, there may be one single drive pedal for controlling the adjusting device of the variable displacement pump and the driving direction is selected by a separate drive selector. Also other control arrangements and elements for controlling the driving can be utilized.

In order to detect whether the mobile machine is driven or stationary, there may be a pressure sensor 21 which is arranged to monitor both control pressure lines 20a, 20b via a monitoring circuit 22. Instead of one common sensor 21 there may be separate pressure sensors 23a and 23b in the pressure lines 20a, 20b. Alternatively, there may be movement sensors 24 which detect actuation of drive pedals 13F and 13R. Sensing data of the mentioned sensors is transmitted to a timing device 25. Electric control lines are shown in figure 4 with broken lines. When control pressure is detected, the timing device 25 is reset. The counting of time is started again when detected that no control pressure is present due to the fact that the mobile machine is not driven. When a predetermined time limit exceeds, it is determined that the mobile machine is stationary and a control signal is produced. The control signal is sent from the timing device 25 to a parking control valve 26 which affects a pressure of a parking brake circuit 27. For safety reasons, there may be two or more control valves 26. In connection with the wheels of the mobile machine there are hydro-mechanical parking brake devices 28 which are connected to the parking brake circuit 27. The control valve 26 is shown in a position where it controls a pressure fluid via the circuit 27 to the parking brake devices 28. The control valve 26 is electrically controlled and when the control signal is received from the timing device 25, the control valve 26 changes its control position so that the circuit 27 is connected to a tank. Then spring elements of the parking brake devices 28 activate the parking brakes on.

Further, figure 4 shows an instrument panel 29 comprising an ignition switch 30, a parking brake switch 31 and a parking brake indication lamp 32. When an electric system is switched off by the ignition switch 30, a control signal is transmitted to the timing device 25. The same applies also when the parking brake switch is actuated manually by the operator.

The drawings and the related description are only intended to illustrate the idea of the invention. The details of the invention may vary within the scope of the claims.

## Claims

1. A mobile machine comprising:
a movable carrier (3) provided with several wheels (4);
a work boom (5) attached to the carrier (3) and having fastening means allowing fastening of an attachment (2) to the boom (5);
a hydrostatic drive system comprising hydraulic drive motors (17) in connection with the wheels (4);
a braking system comprising braking devices (28) in connection with the wheels (4); and
a control system comprising at least one control element (12, 13) for controlling driving (D) of the carrier (3) by affecting the hydrostatic drive system;
**characterized in that**
the control system is arranged to monitor driving (D) of the carrier (3);
and the control system is arranged to engage the braking system automatically and activate parking brakes when determined that the carrier is stationary.

2. The mobile machine as claimed in claim 1, **characterized in that**
the control system is arranged to monitor physical actuation of the at least one control element (12, 13), whereby neutral position and driving position of the control element are detected.

3. The mobile machine as claimed in claim 1 or 2, **characterized in that**
the control element (13, 13F, 13R) is a hydraulic control element which is arranged to control pressures affecting an adjusting device (18) of variable displacement pump (7) of the hydrostatic drive system;
and the control system is provided with at least one pressure sensor (21, 23a, 23b) arranged to monitor pressure in control pressure lines (20a, 20b) which connect the control element and the adjusting device.

4. The mobile machine as claimed in claims 2 or 3, **characterized in that**
the control system comprises at least one timing device (25) wherein at least one time limit is set;
the timing device (25) is arranged to count time after termination of actuation of the control element and which timing device is arranged to reset when the control element is actuated again;
and the control system is arranged to activate the parking brakes in response to exceeding of the time limit.

5. The mobile machine as claimed in claim 4, **characterized in that**
the time limit of the timing device (25) is 2 - 4 seconds.

6. A braking system of a mobile machine (1) comprising:
operating brake means, which are arranged in connection with wheels (4) of the mobile machine (1);
parking brake devices (28), which are independent of the operating brake means; and
a control system for controlling driving (D) of the mobile machine (1):
**characterized in that**
the control system comprises at least one sensor (14, 15, 21, 23a, 23b, 24) arranged to monitor driving (D) of the mobile machine (1);
and the control system is arranged to activate the parking brake devices (28) automatically in response to a determined stationary state of the mobile machine.

7. The braking system as claimed in claim 6, **characterized in that**
the at least one sensor is a pressure sensor (21, 23a, 23b) which is arranged in a control pressure line (20a, 20b) of a hydrostatic drive system of the mobile machine and is thereby arranged to detect hydraulic control commands of the hydrostatic drive system;
the control system comprises at least one timing device (25) wherein at least one time limit is set;
the timing device (25) is arranged to count time when the hydraulic control commands are terminated and no pressure sensing signal from the pressure sensor is received;
the timing device (25) is arranged to reset in response to receiving a control signal from the pressure sensor;
and the control system is arranged to activate the parking brake devices (28) automatically in response to exceeding of the time limit.

8. The braking system as claimed in claim 6, **characterized in that**
the at least one sensor is a motion sensor (24) which is arranged in a drive control element (11, 12, 13) and is arranged to detect moving of the drive control element from a neutral position to a drive position.

9. The braking system as claimed in claim 6, **characterized in that**
the at least one sensor is an acceleration sensor arranged in a carrier (3) of the mobile machine (1).

10. The braking system as claimed in claim 6, **characterized in that**
the at least one sensor is a motion sensor which is arranged to detect rotation movement of wheels or axles or a carrier.

11. The braking system as claimed in claim 6, **characterized in that**
the at least one sensor is a scanning device arranged to sense movements of a carrier relative to a surrounding surface of the mobile machine.

12. The braking system as claimed in claim 9, 10 or 11, **characterized in that**
the control system comprises at least one timing device (25) wherein at least one time limit is set;
the timing device (25) is arranged to count time when the at least one sensor detects that the carrier is stationary;
the timing device (25) is arranged to reset when the at least one sensor detects moving of the carrier;
and the control system is arranged to activate the parking brake devices (28) automatically in response to exceeding of the time limit, whereby the time limit defines a delay for the actuation of the parking brakes.

13. Method of controlling a mobile machine, comprising:
driving the mobile machine (1) on a work site having uneven driving surface (16);
executing at least one work task on the work site;
stopping the mobile machine (1) by means of operational braking means;
and engaging parking brakes;
**characterized by**
detecting driving (D) of the mobile machine by means of at least one sensing device (14, 15, 21, 23a, 23b, 24);
determining a stationary state of the mobile machine on the basis of the sensing data received from the at least one sensing device;
and activating the parking brakes automatically when the stationary state is determined.
